# EUROPEAN PATENT APPLICATION

(11) **EP 3 406 396 A1**
(43) Date of publication of application: **28.11.2018**
(21) Application number: 17000874.2
(22) Date of filing: 23.05.2017
(51) Int. Cl.: B23Q 1/01, B23Q 11/00

(54) **PORTAL MILLING MACHINE FOR LARGE OBJECTS**

(71) Applicant: Kockmann, Bruno, 46342 Velen (DE)
(72) Inventor: Kockmann, Bruno, 46342 Velen (DE)

(57) **Abstract**

A portal milling machine with vertically movable milling carriage is stabilized by an additional transverse beam, that can also be vertically positioned.

## Description

### FIELD OF THE INVENTION

The invention relates to a portal milling machine and more specifically to a portal milling machine with a enlarged processing range. Moreover, workpieces can be lathed by rotating on an axis, that is supported on the frame of the milling table.

### BACKGROUND OF THE INVENTION

Portal milling is mainly used for surface treatment of planar workpieces or for the straightening of surfaces. It allows high precision machining at rather low investment.

However, the vertical machining range hitherto had been limited, as long as milling slides are mounted only to one transverse beam, because of the accumulation of positioning errors at longer distance between the fixing point and the milling head.

Therefore portal milling is considered not to be suitable to process workpieces with large depth at sufficient precision.

Normally workpieces are clamped to a processing table and can thus only be processed on one side without readjustment. The use of an additional rotating axis ontop of the working bench, on which the workpiece can be rotated during machining, reduces the processing height.

### TASK OF THE INVENTION

A portal milling machine is to be realized, which processes workpieces of greater height with unrestricted precision. This should also be applicable on workpieces with irregular elevation profiles (e.g., rounded or corrugated). Furthermore, it should be possible to process workpieces without remounting it for access to all sides without reducing the vertical work space.

### SOLUTION

One inventive step here is to add another transverse beam, extending horizontally within the portal interior, for stabilising the milling cartridge on two axis - horizontally and vertically.

With it the guidance of the milling cartridge is stabilized, so that longer distance from the fixation on the upper beam would not result in vertical deflection of the milling instrument.

A second inventive step is to have the milling table constructed from profiles, that can be dismounted to make way for larger workpieces, that may be immersed into the operational range below the standard level.

A third inventive step includes rotary brackets for workpieces, that are located on the edges at the longitudinal axis of the table.Thus, workpieces higher than the processing space of the portal can be attached to these brackets and rotated, thus partially submerging below the level of the table.

Moreover, with rotation on an axis between these rotary brackets it is also possible to provide a lathing function by turning the object and operating the milling simutaenously.

### PRIOR ART

DE 3238197 C1 describes a portal milling machine of a classic type with a vertically movable milling carriage. Due to the required precision, the movable suspension of the milling carriage at only one point and the occurring forces and vibrations due to the machining of the workpiece, the milling carriage can only be moved over a relatively short distance.

DE 1926988 A describes a portal milling machine whose portal width is variable. In this case, too, the milling slides can be moved vertically only for a relatively short distance.

EP 2828023 B1 describes a numerically controlled machine tool whose milling unit is attached to an auxiliary cross beam for stabilization, in addition to the usual attachment to the main transverse beam. However, the auxiliary transverse beam is fixedly connected to the main transverse beam and only slightly increases the vertical machining space.

The portal milling machine in EP1186371 has, in addition to a first transversely running rail which carries the milling carriage, a second rail which runs parallel to it and serves to stabilize the milling carriage. This second rail stabilizes the milling head, but does not increase the vertical machining space since both rails have a fixed distance from one another.

### CLOSER DESCRIPTION ALONG TO THE DRAWING

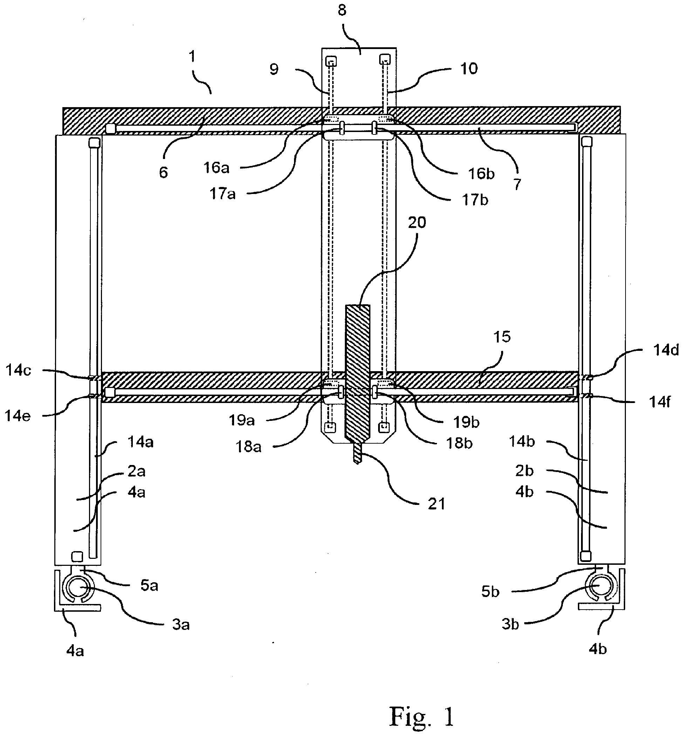

FIG. 1 shows the portal (1) in a front view. It is moved back and forth on linear guides (3a and 3b) of the frame (4a and 4b) on the underside of its vertical columns (2a and 2b) by means of a recirculating ball bearing guides (5a and 5b).

The upper transverse beam (6), which has the first linear guide (7) with which the upper part of the milling carriage (8) is guided by means of a recirculating ball bearing guides (17a and 17b), rests on the upper end of the columns (2a and 2b). There are the recirculating ball bearing guides (16a and 16b), with which the milling sled (8) is moved up and down along vertical linear guides (9 and 10).
Between the columns (2a and 2b), the second, movable transverse beam (11) is arranged, which is guided on the columns (2a and 2b) on linear guides (14a and 14b) by means of recirculating ball bearing guides (14c, 14d, 14e and 14f) up and down.
At the second movable transverse beam is the second linear guide (15) where the the lower part of the milling carriage (8) is moved back and forth by means of recirculating ball bearing guides (18a and 18b).
There, the the milling carriage (8) is moved up and down by means of recirculating ball bearing guides (19a and 19b) along vertical linear guides (9 and 10)
The drive (20) of the milling head and the milling head (21) are located in the milling carriage,

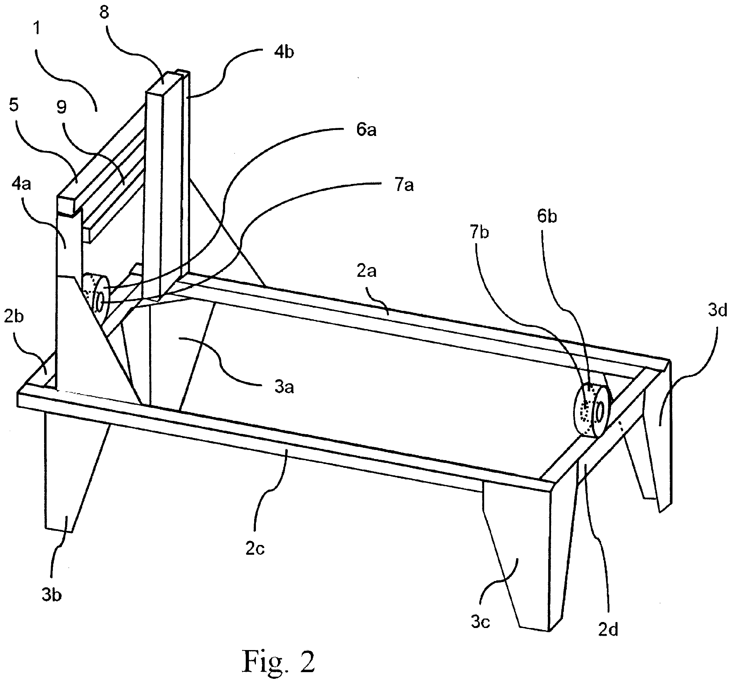

FIG. 2 shows an exemplary construction of the portal milling machine (1), basically consisting of the frame (2a, 2b, 2c and 2d) resting on feet (3a, 3b, 3c and 3d), the vertical columns (4a and 4b), the fixed (5) and the movable (9) transverse beam of the portal.
Attached to the portal is the milling carriage (8). Attached to the frame (2b and 2d) are the rotary unit consisting the drive (6a and 6b) and the workpiece holder (7a and 7b).

## Claims

1. A portal milling machine for machining large-dimensioned workpieces having a vertically moving milling carriage guided on a transverse beam, comprising one or more additional transverse beams, arranged at different heights, which stabilize the milling carriage.

2. A portal milling machine for machining large-dimensioned workpieces as to claim 1, wherein the additional transverse beams can be positioned independently of the vertical movement of the milling carriage.

3. A portal milling machine for machining large-dimensioned workpieces as to claim 1 and 2, wherein the machining table is composed of dismountable elements.

4. A portal milling machine for machining large-dimensioned workpieces as to claim 1, 2 and 3, wherein the processing space can be enlarged by the removal of individual profiles of the machining table.

5. A portal milling machine for machining large-dimensioned workpieces as to claim 1, 2, 3 and 4, wherein workpieces can be mounted to rotate on their longitudinal axis within arranged spaces on the processing table.

6. A portal milling machine for machining large-dimensioned workpieces as to claim 1, 2, 3, 4 and 5, wherein workpieces can be lathed.
